(19) Europäisches Patentamt
European Patent Office
Office européen des brevets

(11) **EP 4 654 603 A1**

(12) **EUROPEAN PATENT APPLICATION**

(43) Date of publication:
**26.11.2025 Bulletin 2025/48**

(21) Application number: **25177604.3**

(22) Date of filing: **20.05.2025**

(51) International Patent Classification (IPC):
**H04N 25/62** (2023.01)     **H04N 25/68** (2023.01)
**H04N 25/773** (2023.01)

(52) Cooperative Patent Classification (CPC):
**H04N 25/68; H04N 25/62; H04N 25/773**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024 JP 2024083506**

(71) Applicant: **CANON KABUSHIKI KAISHA
Tokyo 146-8501 (JP)**

(72) Inventor: **NUMATA, Aihiko
Ohta-ku, Tokyo, 146-8501 (JP)**

(74) Representative: **TBK
Bavariaring 4-6
80336 München (DE)**

(54) **PROCESSING APPARATUS, PROCESSING METHOD, AND COMPUTER PROGRAM**

(57)     A processing apparatus for generating and correcting an image based on a count value output by a photoelectric conversion element that has an avalanche photodiode, converts light from a subject into an electrical signal, counts the electrical signal, and outputs the count value, the processing apparatus generates a first image based on the count value, and executes correction processing for correcting the first image, wherein the correction processing includes first correction processing for a first pixel including a pixel in a surrounding area of a first type of defective pixel in which miscounting occurs due to a first cause, and second correction processing different from the first correction processing for a second pixel including a pixel in a surrounding area of a second type of defective pixel in which miscounting occurs due to a second cause different from the first cause.

F I G. 9

**Description**

TECHNICAL FIELD

The present disclosure relates to a processing apparatus, a processing method, and a computer program.

BACKGROUND

In recent years, a photoelectric conversion apparatus is known which counts the number of photons incident on an avalanche photodiode (APD) and outputs the count value from a pixel as a photoelectrically-converted digital signal.
It is known that a phenomenon called avalanche light emission occurs in a photoelectric conversion apparatus having an APD. When avalanche light emission occurs, secondary electrons that are generated are incident on adjacent pixels, whereby the count values of the adjacent pixels increase, resulting in miscounting. In particular, if the pixel in question is a defective pixel, crosstalk caused by the avalanche light emission phenomenon will cause the defect to become a cluster defect spanning a plurality of pixels.
Japanese Patent Laid-Open No. 2023-118661 discloses a method for correcting a cluster defect caused by crosstalk by using a matrix of the probability of light-emission crosstalk caused by avalanche light emission as a correction array.
However, in a photoelectric conversion apparatus having an APD, a defective pixel caused by another factor may occur in addition to a defective pixel caused by light-emission crosstalk. If the same correction method as for light-emission crosstalk is applied to defective pixels resulting from such different causes, the image quality may deteriorate due to the correction.

SUMMARY

In view of this, the present disclosure provides a processing apparatus, a processing method, and a computer program that suppress deterioration of image quality while correcting defective pixels caused by a plurality of different causes in an apparatus having an APD.
According to one aspect of the present disclosure, there is provided a processing apparatus as specified in claim 1. Optional features are specified in claim 2 to 18.
According to another aspect of the present disclosure, there is provided a processing method as specified in claim 19.
According to another aspect of the present disclosure, there is provided a computer program as specified in claim 20.
Features of the present disclosure will become apparent from the following description of embodiments with reference to the attached drawings. The following description of embodiments are described by way of example.

BRIEF DESCRIPTION OF THE DRAWINGS

FIG. 1 is an exploded perspective view showing an example of an overall configuration of a photoelectric conversion element according to an embodiment.
FIG. 2 is a schematic plan view showing a sensor substrate according to an embodiment.
FIG. 3 is a diagram showing an example of a configuration of a circuit board according to an embodiment.
FIG. 4 is a diagram showing an equivalent circuit of a photoelectric conversion unit and a signal processing circuit of a pixel according to an embodiment.
FIG. 5 is a timing chart that schematically shows a relationship between operation of an APD and an output signal.
FIG. 6 is a block diagram showing a configuration of a photoelectric conversion apparatus according to a first embodiment.
FIG. 7 shows an example of first array data.
FIG. 8 is a flowchart of signal processing in the photoelectric conversion apparatus of the first embodiment.
FIG. 9 are diagrams showing change in an image in correction processing of the first embodiment.
FIG. 10A is a diagram showing a luminance distribution of pixels in a surrounding area of a first type of defective pixel.
FIG. 10B is a diagram showing a luminance distribution of pixels in a surrounding area of a first type of defective pixel.
FIG. 10C is a diagram showing a luminance distribution of pixels in a surrounding area of a second type of defective pixel.
FIG. 10D is a diagram showing a luminance distribution of pixels in a surrounding area of a second type of defective pixel.

FIG. 11A is a diagram in which luminance values of pixels in an intermediate stage (second image) of signal processing (correction processing) in a comparative example are indicated as shades of color (differences in hatching).

FIG. 11B is a diagram showing relative output of a luminance distribution on an X-axis of FIG. 11A.

FIG. 11C is a diagram in which luminance values of pixels in an intermediate stage (second image) of signal processing (correction processing) in a comparative example are indicated as shades of color (differences in hatching).

FIG. 11D is a diagram showing relative output of a luminance distribution on an X-axis of FIG. 11C.

FIG. 12A is a diagram in which luminance values of pixels of a result (third image) of signal processing (correction processing) in a comparative example are indicated as shades of color (differences in hatching).

FIG. 12B is a diagram showing relative output of a luminance distribution on an X-axis of FIG. 12A.

FIG. 12C is a diagram in which luminance values of pixels of a result (third image) of signal processing (correction processing) in the comparative example are indicated as shades of color (differences in hatching).

FIG. 12D is a diagram showing relative output of a luminance distribution on an X-axis of FIG. 12C.

FIG. 13 are diagrams showing change in an image (a first type of defective pixel) in other correction processing according to the first embodiment.

FIG. 14 are diagrams showing change in an image (a second type of defective pixel) in other correction processing according to the first embodiment.

FIG. 15 is a flowchart showing defective pixel extraction processing according to the first embodiment.

FIG. 16A is a diagram illustrating a surrounding area of a pixel of interest, for illustrating first defect extraction processing for extracting a defective pixel according to the first embodiment.

FIG. 16B is a diagram illustrating a surrounding area of a pixel of interest, for illustrating second defect extraction processing for distinguishing a defective pixel according to the first embodiment.

FIG. 16C is a diagram illustrating a surrounding area of a pixel of interest, for illustrating defective pixel extraction processing according to the first embodiment.

FIG. 16D is a diagram illustrating a surrounding area of a pixel of interest, for illustrating defective pixel extraction processing according to the first embodiment.

FIG. 17 is a diagram showing an equivalent circuit of a photoelectric conversion unit and a signal processing circuit of a pixel according to a second embodiment.

FIG. 18 is a timing chart of the photoelectric conversion element according to the second embodiment.

FIG. 19 is a flowchart of signal processing in a photoelectric conversion apparatus according to the second embodiment.

FIG. 20 is a block diagram showing an overall configuration of a photoelectric conversion system according to a third embodiment.

FIG. 21 is a block diagram showing a hardware configuration of a control unit according to the third embodiment.

DESCRIPTION OF THE EMBODIMENTS

Hereinafter, embodiments will be described in detail with reference to the attached drawings. Note, the following embodiments are not intended to limit the scope of the claimed disclosure. Multiple features are described in the embodiments, but limitation is not made to an disclosure that requires all such features, and multiple such features may be combined as appropriate. Furthermore, in the attached drawings, the same reference numerals are given to the same or similar configurations, and redundant description thereof is omitted.

Photoelectric Conversion Element

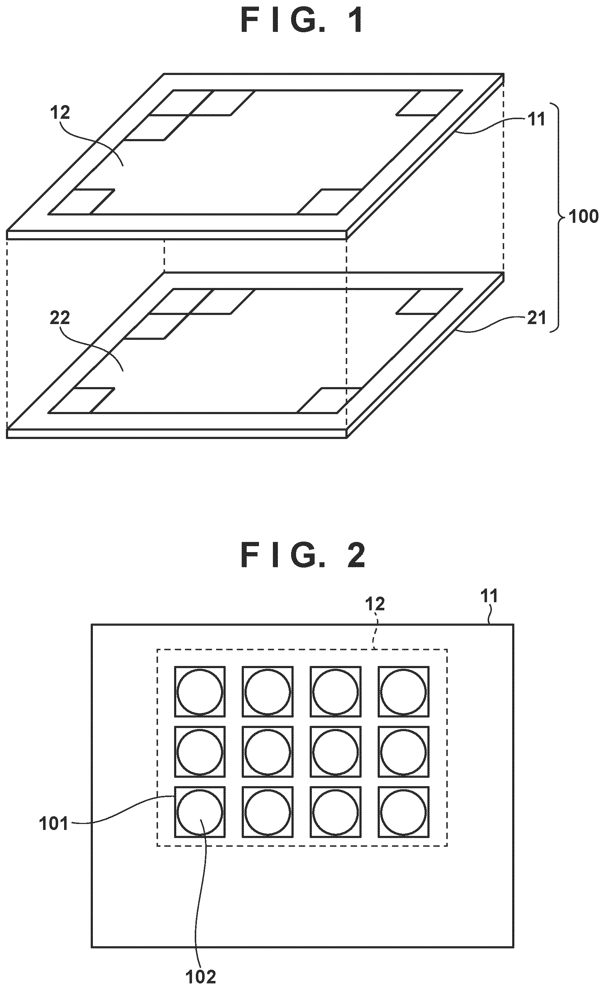

FIG. 1 is an exploded perspective view showing an example of an overall configuration of a photoelectric conversion element according to an embodiment. The photoelectric conversion element will be described with reference to FIG. 1.

As shown in FIG. 1, the photoelectric conversion element 100 includes a sensor substrate 11 and a circuit board 21. The sensor substrate 11 and the circuit board 21 are stacked and electrically connected to each other. That is, the photoelectric conversion element 100 has a stacked structure. The photoelectric conversion element 100 is not limited to the above-mentioned configuration. For example, the photoelectric conversion element 100 may have a so-called non-stacked structure in which the components included in the sensor substrate and the components included in the circuit board are disposed on a common semiconductor layer. The sensor substrate 11 includes a pixel region 12 that includes a plurality of pixels. The circuit board 21 includes a circuit region 22 that processes signals detected by the pixels in the pixel region 12.

Sensor Substrate

FIG. 2 is a schematic plan view showing a configuration of the sensor substrate 11 according to the embodiment. The pixel region 12 of the sensor substrate 11 includes a plurality of pixels 101 arranged two-dimensionally (also called a matrix) across a plurality of rows and a plurality of columns. Each pixel 101 includes a photoelectric conversion unit 102 including an avalanche photodiode (hereinafter, APD). Note that the number of rows and the number of columns of the pixels 101 in the pixel region 12 are not particularly limited.

Circuit Board

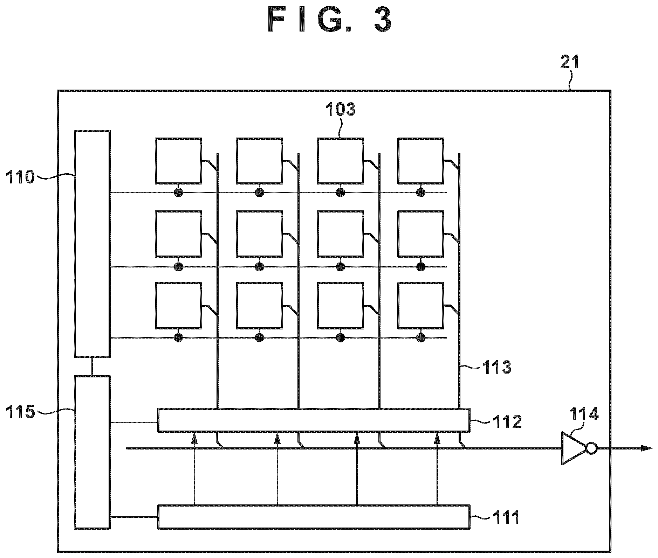

FIG. 3 is a diagram showing an example of a configuration of the circuit board 21 according to the embodiment. The circuit board 21 has a signal processing circuit 103 that processes charges photoelectrically converted by the photoelectric conversion unit 102 in FIG. 2, a vertical scanning circuit 110, a horizontal scanning circuit 111, a readout circuit 112, a signal line 113, and a control pulse generation unit 115.

The signal processing circuit 103 acquires and processes the electrical signals output from the photoelectric conversion units 102 of the pixels. The signal processing circuit 103 includes counters associated with the respective pixels, a memory for holding digital values, and the like. The signal processing circuit 103 counts the numbers of photons incident on the pixels and stores the count values in a memory. The signal processing circuit 103 outputs the counted count values based on a control pulse, which will be described later.

The vertical scanning circuit 110 receives a control pulse supplied from a control pulse generation unit 115 and supplies the control pulse to the signal processing circuit 103 of each pixel. The vertical scanning circuit 110 includes logic circuits such as a shift register and an address decoder.

The horizontal scanning circuit 111 supplies a control pulse that sequentially selects each column to the signal processing circuit 103 in order to read out a signal from the memory of each pixel in which a digital signal is held. The control pulse supplied by the horizontal scanning circuit 111 is a pulse for reading out a pixel signal including a count value of each pixel held in the memory of the signal processing circuit 103.

The readout circuit 112 reads out pixel signals including count values and the like, which are outputs from the signal processing circuit 103, via the signal line 113 on a column-by-column basis, based on a control pulse generated by the vertical scanning circuit 110. The readout circuit 112 has a shift register and an address decoder that connects a plurality of rows as one unit. Accordingly, the readout circuit 112 realizes high-speed readout by reading out pixel signals from a plurality of rows at once. In particular, in the case of an imaging apparatus that digitally counts the number of photons incident on an APD of a pixel and outputs the count value from the pixel as a photoelectrically-converted digital signal, the operation of the counter circuit that digitally counts the number of photons takes time, and therefore high-speed pixel signal readout is achieved by simultaneously reading out signals from a plurality of rows of pixels. The readout circuit 112 of the present embodiment reads out, for example, a pixel signal from a pixel included in a first row and a pixel signal from a pixel included in a second row simultaneously on a column-by-column basis.

A pixel signal including a count value and the like is output to the signal line 113 from the signal processing circuit 103 of a pixel at the intersection of the column selected by the horizontal scanning circuit 111 and the one or more rows selected by the vertical scanning circuit 110.

The output circuit 114 outputs the pixel signal, which is output via the signal line 113 and the readout circuit 112, to the outside of the photoelectric conversion element 100.

The control pulse generation unit 115 controls the photoelectric conversion element 100. Specifically, the control pulse generation unit 115 supplies control pulses to the vertical scanning circuit 110 and the horizontal scanning circuit 111 in order to selectively read out a pixel signal from each pixel.

Connection Between Sensor Substrate and Circuit Board

As shown in FIGS. 2 and 3, a plurality of signal processing circuits 103 are arranged in a region overlapping with the pixel region 12 in a plan view. The sensor substrate 11 has the pixel region 12 and a non-pixel region surrounding the pixel region 12. The non-pixel region is a region between the end of the sensor substrate 11 and the end of the pixel region 12. The vertical scanning circuit 110, the horizontal scanning circuit 111, the readout circuit 112, the output circuit 114, and the control pulse generation unit 115 are arranged in the non-pixel region in a plan view.

Note that the layout of the vertical scanning circuit 110, the horizontal scanning circuit 111, the readout circuit 112, the signal line 113, and the output circuit 114 is not limited to that shown in FIG. 3. For example, the signal line 113 may be disposed to extend in the row direction, and the readout circuit 112 may be disposed at the end of the signal line 113. Also, it is not necessary to provide one signal processing circuit 103 for each photoelectric conversion unit 102, and one signal processing circuit 103 may be shared by a plurality of photoelectric conversion units 102. In this case, signal processing may be performed sequentially.

Equivalent Circuit of Pixel

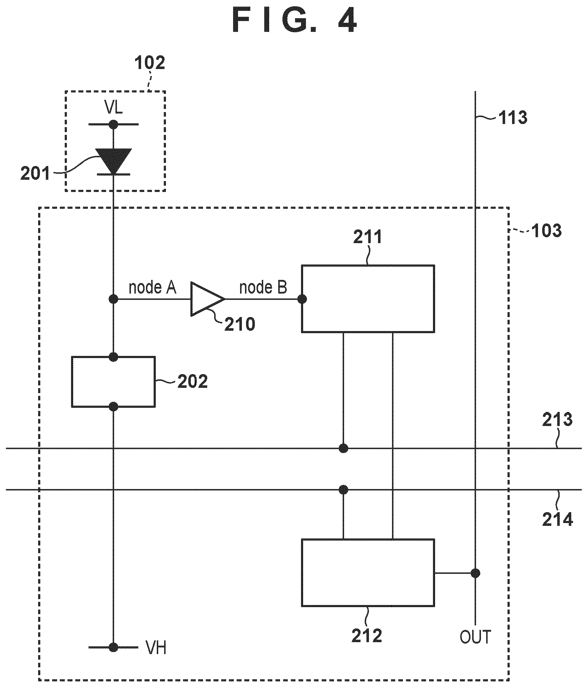

FIG. 4 is a diagram showing an equivalent circuit of the photoelectric conversion unit 102 and the signal processing circuit 103 of the pixel 101. As shown in FIG. 4, the photoelectric conversion unit 102 includes an APD 201.

The APD 201 is an avalanche photodiode that generates charge pairs corresponding to the incident light (number of photons) through photoelectric conversion. One of the two nodes of the APD 201 is connected to a power supply line through which a driving voltage VL (first voltage) is supplied. The other of the two nodes of the APD 201 is connected to a power supply line through which a driving voltage VH (second voltage) higher than the driving voltage VL is supplied. In FIG. 4, one node of the APD 201 is the anode and the other node of the APD 201 is the cathode. A reverse bias voltage by which the APD 201 performs an avalanche multiplication operation is supplied to the anode and cathode of the APD 201. By supplying such a voltage, in the APD 201, avalanche multiplication occurs due to charges generated by incident light, and an avalanche current is generated.

When a reverse bias voltage is supplied, the APD 201 can be operated in a Geiger mode in which the voltage difference between the anode and cathode of the APD 201 is greater than the breakdown voltage, or in a linear mode in which the voltage difference between the anode and cathode is close to or less than the breakdown voltage. An APD operated in the Geiger mode is called a single photon avalanche diode (SPAD). In the case of an SPAD, for example, the voltage VL (first voltage) is -30 V, and the voltage VH (second voltage) is 1 V.

The signal processing circuit 103 includes a quench element 202, a waveform shaping unit 210, a counter circuit 211, and a selection circuit 212. Note that the signal processing circuit 103 need only include at least one of the waveform shaping unit 210, the counter circuit 211, and the selection circuit 212.

The quench element 202 is connected to a power supply line through which the driving voltage VH is supplied and to one node out of the anode and cathode of the APD 201. The quench element 202 functions as a load circuit (quench circuit) during signal multiplication by avalanche multiplication. Accordingly, the quench element 202 has a function of suppressing the voltage supplied to the APD 201 and suppressing avalanche multiplication (quench operation). The quench element 202 has a function of returning the voltage supplied to the APD 201 to the driving voltage VH by passing a current corresponding to the voltage drop caused by the quench operation (recharge operation).

The waveform shaping unit 210 shapes the voltage change of the cathode of the APD 201 obtained during photon detection and outputs a pulse signal. The waveform shaping unit 210 may be, for example, one inverter circuit. Note that the waveform shaping unit 210 may be configured with a plurality of inverter circuits connected in series, or may be any other circuit having a waveform shaping effect.

The counter circuit 211 counts the pulse signal output from the waveform shaping unit 210 and holds the count value. Also, when a control pulse RES is supplied via the driving line 213, the counter circuit 211 outputs the held count value and resets the count value.

Upon being supplied with a control pulse SEL from the vertical scanning circuit 110 of FIG. 3 via the drive line 214 of FIG. 4 (not shown in FIG. 3), the selection circuit 212 switches between electrical connection and non-connection between the counter circuit 211 and the signal line 113. The selection circuit 212 includes, for example, a buffer circuit or the like for outputting a signal. The output signal OUT shown in FIG. 4 is an output signal from a pixel.

A switch such as a transistor may be disposed between the quench element 202 and the APD 201, and between the photoelectric conversion unit 102 and the signal processing circuit 103 to switch the electrical connection. Similarly, the supply of the voltage VH or the voltage VL to the photoelectric conversion unit 102 may be electrically switched using a switch such as a transistor.

Drive of Circuit

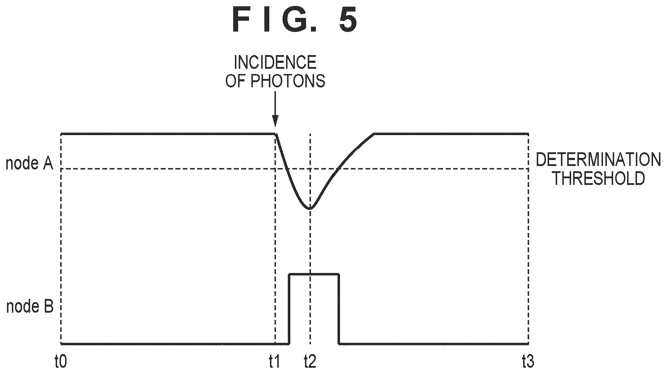

FIG. 5 is a timing chart that schematically shows the relationship between the operation of the APD and the output signal. Node A indicates the input side of the waveform shaping unit 210. Node B indicates the output side of the waveform shaping unit 210. Between time t0 and time t1, a potential difference of VH-VL is applied to the APD 201. When a photon is incident on the APD 201 at time t1, avalanche multiplication occurs in the APD 201, an avalanche multiplication current flows through the quench element 202, and the voltage at node A drops. When the amount of voltage drop further increases and the potential difference applied to the APD 201 decreases, the avalanche multiplication of the APD 201 stops, as at time t2, and the voltage level of node A does not drop by a certain value or more. After time t2, current that compensates for the voltage drop from the voltage VL flows through node A, and the potential level rises to reach VL. Thereafter, node A is stabilized at the original potential level until time t3. At this time, the potential level at the time when the output waveform at node A exceeds a certain determination threshold is waveform-shaped by the waveform shaping unit 210 and is output as a signal from node B.

The photoelectric conversion apparatuses of the respective embodiments will be described below.

First Embodiment

Photoelectric Conversion Apparatus

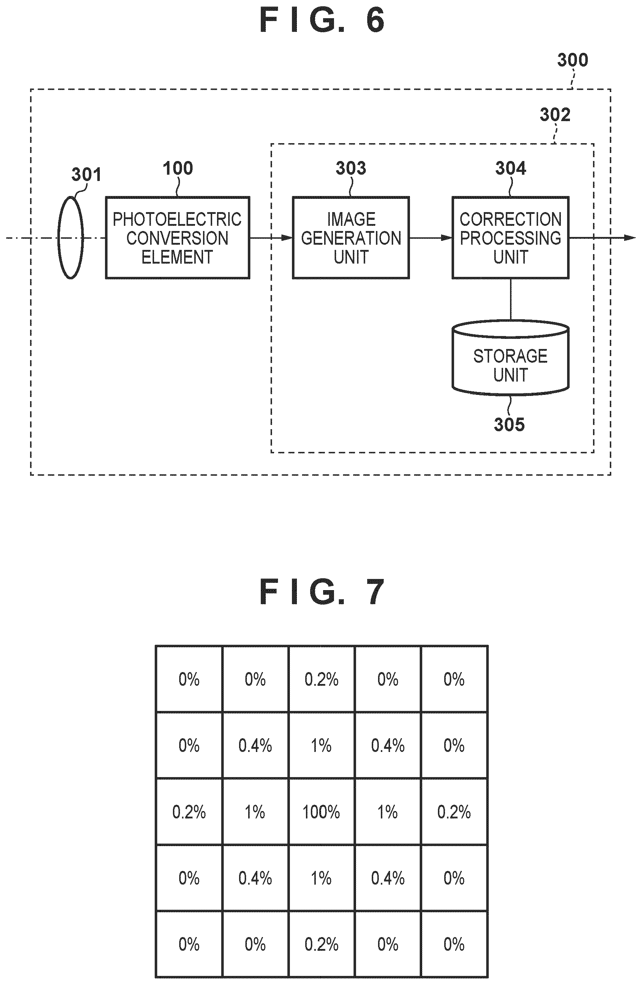

FIG. 6 is a block diagram showing a configuration of a photoelectric conversion apparatus 300 according to the first embodiment. The photoelectric conversion apparatus 300 includes a photoelectric conversion element 100 having the APD 201 described with reference to FIGS. 1 to 5, an image forming optical system 301, and a signal processing unit 302 that processes a signal acquired by the photoelectric conversion element 100.

The image forming optical system 301 includes a lens, a diaphragm, and the like. The image forming optical system 301 guides light from a subject to the photoelectric conversion element 100.

The signal processing unit 302 is an example of a processing apparatus, and includes an image generation unit 303, a correction processing unit 304, and a storage unit 305. The image generation unit 303 and the correction processing unit 304 may be realized by one or more circuits such as an application specific integrated circuit (ASIC) and a programmable logic device (PLD) including a field programmable gate array (FPGA).

The image generation unit 303 generates a first image from the pixel signals acquired from the photoelectric conversion element 100.

The correction processing unit 304 uses information of the first array data based on characteristic information of the photoelectric conversion element 100 to perform correction processing on the pixel values (also called output values) of pixels in a surrounding area of a defective pixel.

The storage unit 305 includes a storage apparatus such as a random access memory (RAM), a read only memory (ROM), and a storage such as a hard disk drive (HDD) and a solid state drive (SSD). The storage unit 305 stores a computer program for executing image generation and correction processing, image data, first array data based on characteristic information of the photoelectric conversion element 100, and the like.

As shown in Japanese Patent Laid-Open No. 2023-118661, when a pixel has an APD, the avalanche light emission phenomenon causes miscounting in adjacent pixels, that is, crosstalk between adjacent pixels (hereinafter referred to as light-emission crosstalk).

The effect of light-emission crosstalk on adjacent pixels is determined by the probability of light-emission crosstalk occurring. The occurrence probability of light-emission crosstalk is determined by the pixel structure of the photoelectric conversion element, and therefore the occurrence probability of light-emission crosstalk can be predicted based on the pixel structure of the photoelectric conversion element.

That is, the characteristic information means the occurrence probability of light-emission crosstalk that is determined by the pixel structure of the photoelectric conversion element.

FIG. 7 is a diagram showing an example of the first array data. As shown in FIG. 7, the first array data associates the positions of the pixels with the probabilities of the occurrence of miscounting according to the occurrence probabilities of light-emission crosstalk. Each block indicates one pixel. The probability of miscounting occurring is one example of a correction value. More specifically, when light-emission crosstalk occurs in a central pixel, the probability of the occurrence of miscounting of the central pixel is 100%, while the occurrence probability of miscounting of the pixels adjacent to the central pixel on the left, right, top, and bottom (also called most-adjacent pixels) is 1%. The first array data is stored in the storage unit 305. The correction processing unit 304 uses the first array data to correct the pixels in the surrounding area of the defective pixel.

Flowchart

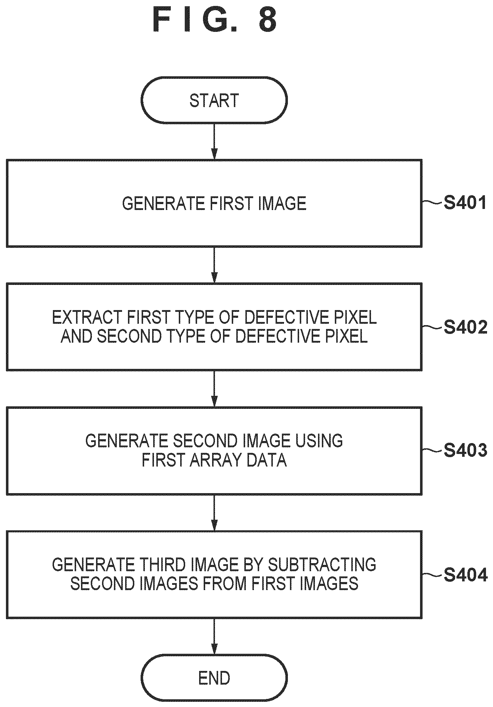

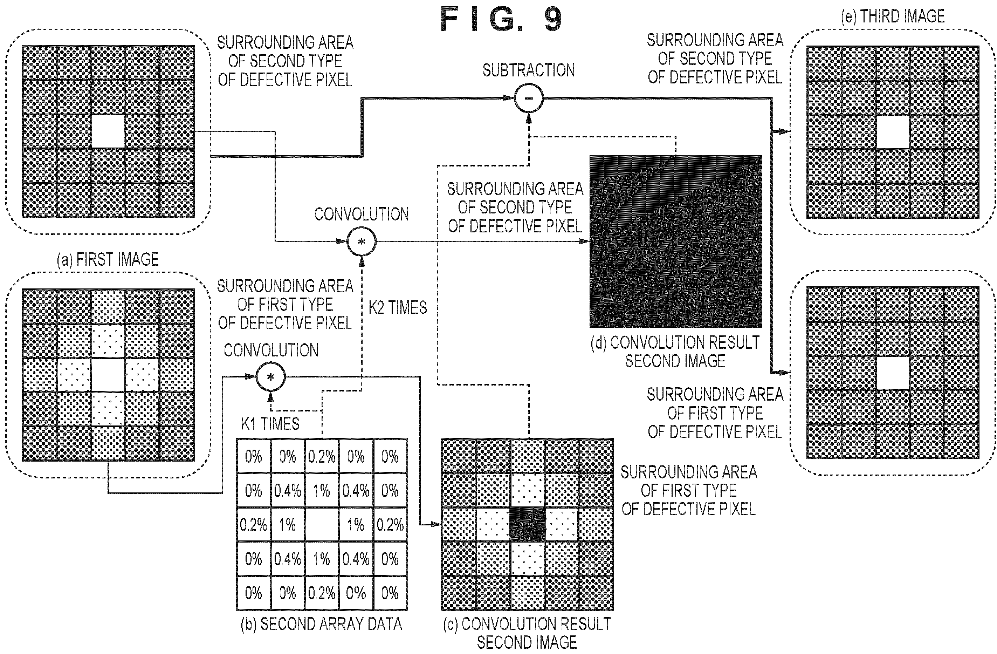

FIG. 8 is a flowchart of the signal processing according to the first embodiment. FIG. 9 are diagrams showing change in an image in the above-mentioned correction processing. FIG. 9(a) is a diagram showing first images. The first image in the upper part of FIG. 9(a) shows a second type of defective pixel and pixels in a surrounding area of the defective pixel. The first image in the lower part of FIG. 9(a) shows a first type of defective pixel and pixels in a surrounding area of the defective pixel. FIG. 9(b) is a diagram showing second array data. FIG. 9(c) is a diagram showing a second image that is the result of a convolution operation performed on the first type of defective pixel. FIG. 9(d) is a diagram showing a second image that is the result of a convolution operation performed on the second type of defective pixel. FIG. 9(e) shows a third image. The third image in the upper part of FIG. 9(e) shows the second type of defective pixel and the pixels in the surrounding area of the defective pixel. The third image in the lower part of FIG. 9(e) shows the first type of defective pixel and pixels in the surrounding area of the defective pixel. The first signal processing will be described with reference to FIGS. 8 and 9.

First, in step S401, the image generation unit 303 generates a first image arranged in a two-dimensional frame shape from pixel signals including count values acquired from the photoelectric conversion element 100.

Next, in step S402, the correction processing unit 304 performs defective pixel extraction processing for extracting the first type of defective pixel and the second type of defective pixel shown in FIG. 9(a), on the first image generated by the image generation unit 303. Specific defective pixel extraction processing will be described later. Note that the positions of the first type of defective pixel and the second type of defective pixel may be determined by acquiring a dark image in advance, extracting information about the defective pixels from the dark image, and storing the extracted information in a memory as address data. The defective pixel extraction processing in this context includes processing for extracting a defective pixel and processing for distinguishing the extracted defective pixel as a first type of defective pixel or a second type of defective pixel.

Next, in step S403, the correction processing unit 304 generates a second image using the first array data. Specifically, the correction processing unit 304 generates a second image by performing, on the first image, a convolution operation using second array data that was created based on the first array data. As described above, since the probability of the occurrence of light-emission crosstalk is predictable, it is possible to predict miscounting caused by light-emission crosstalk by performing a convolution operation using the second array data.

The second array data need only be obtained by replacing the value (100%) of the center element of the first array data with zero (see FIG. 9(b)). By creating the second array data in this manner, the correction processing unit 304 makes the second image an image obtained by restoring a signal representing miscounting caused by light-emission crosstalk. However, the second array data may be different as long as it is based on the first array data.

The correction processing unit 304 generates a second image by executing a convolution operation on the first image according to the array data obtained by multiplying the second array data by a weighting coefficient. Here, the correction processing unit 304 makes a weighting coefficient K2 of the correction processing in the surrounding area of the second type of defective pixel different from the weighting coefficient K1 of the correction processing the surrounding area of the first type of defective pixel (see FIG. 9(b)). For example, the correction processing unit 304 makes the weighting coefficient K2 of the correction processing in the surrounding area of the second type of defective pixel smaller than the weighting coefficient K1 of the correction processing in the surrounding area of the first type of defective pixel. Note that the weighting coefficients may also be set in advance. The correction processing unit 304 generates the second images by executing a convolution operation according to array data obtained by multiplying the second array data by different weighting coefficients, on the pixels in the surrounding area of the first type of defective pixel in the first image and the pixels in the surrounding area of the second type of defective pixel (see FIGS. 9(c) and 9(d)). Note that although details will be described later, the first type of defective pixel is a defective pixel with a higher occurrence probability of miscounting caused by light-emission crosstalk than that of the second type of defective pixel.

Thereafter, in step S404, the correction processing unit 304 generates third images by subtracting the second images from the first images (see FIG. 9(e)). As described above, the second image is a signal representing miscounting caused by light-emission crosstalk, and therefore the third image is an image obtained by restoring the signal that would have been obtained if no miscounting caused by light-emission crosstalk had occurred. That is, the processing in steps S403 and S404 has reduced the influence of miscounting caused by light-emission crosstalk. Note that the correction processing path from the first image of the first type of defective pixel in the lower part of FIG. 9(a) to the third image of the first type of defective pixel in the lower part of FIG. 9(e) is an example of first correction processing. The correction processing path from the first image of the second type of defective pixel in the upper part of FIG. 9(a) to the third image of the second type of defective pixel in the upper part of FIG. 9(e) is an example of second correction processing.

Note that in step S404, instead of performing the convolution operation, the first image and the second array data may be subjected to a Fourier transform and then the product may be obtained.

Crosstalk Matrix

The first array data may be one-dimensional or two-dimensional as long as it includes two or more pieces of data (occurrence probabilities), but will be described as two-dimensional array data as shown in FIG. 7. The first array data is, for example, a matrix with odd numbers of rows and columns, and is symmetrical vertically and horizontally around the center, taking into consideration the symmetry of the occurrence probability of light-emission crosstalk. Since the occurrence probability of light-emission crosstalk increases closer to the pixel in question, the crosstalk matrix of the first array data has a maximum value (peak value) in the center in the row and column directions, and has a distribution that changes monotonically (e.g., monotonically decreases) toward the periphery. In addition, one row or one column of the crosstalk matrix, which is two-dimensional array data, is extracted as one-dimensional data. The occurrence probability of light-emission crosstalk in this one-dimensional data in the row and column directions has a distribution that monotonically decreases toward both ends from the center, which is the peak value. In addition, in other one-dimensional data that shares the peak value of the extracted one-dimensional data and is arrayed in a direction intersecting the one-dimensional data, the occurrence probability of light-emission crosstalk has a distribution that monotonically decreases from the peak value toward the end of the data.

Advantageous Effects of the Present Embodiment

Next, the effects of this embodiment will be described in comparison with a comparative example in which correction processing is performed with the same weighting coefficient on the surrounding area of a first type of defective pixel and the surrounding area of a second type of defective pixel.

As described above, light-emission crosstalk is crosstalk caused by the avalanche light emission phenomenon, and therefore there is a high probability that miscounting will occur due to light-emission crosstalk from the first type of defective pixel in the pixels in a surrounding area of the first type of defective pixel caused by the device characteristics of the APD. On the other hand, in the pixels in the surrounding area of the second type of defective pixel in which miscounting caused by the counter circuit 211 occurs, there is a low probability that miscounting caused by light-emission crosstalk from the second type of defective pixel will occur. That is, the first type of defective pixel is a defective pixel in which the occurrence probability of miscounting caused by light-emission crosstalk occurs is higher than that of the second type of defective pixel. In other words, it can be said that the pixels in the surrounding area of the first type of defective pixel and the pixels in the surrounding area of the second type of defective pixel have different causes of miscounting.

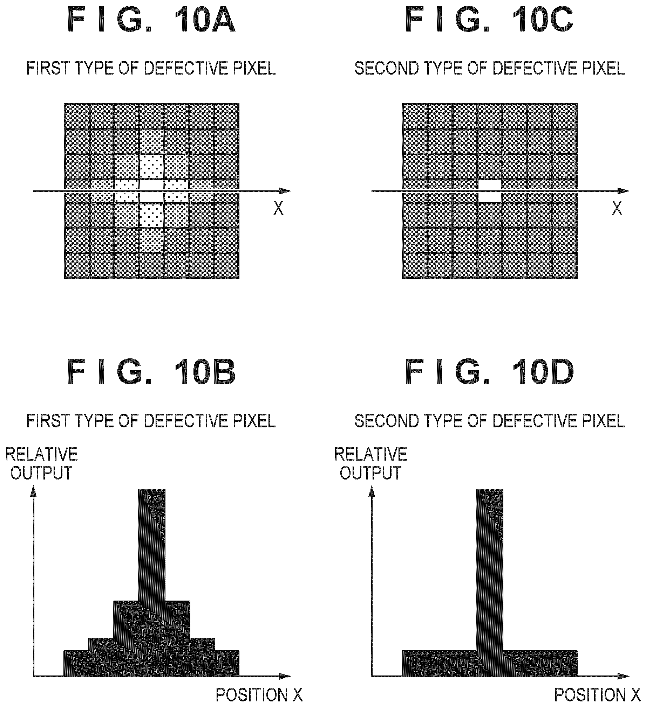

FIGS. 10A to 10D are diagrams showing luminance distributions in surrounding areas of defective pixels before signal processing (before correction processing). FIGS. 10A and 10B are diagrams showing the luminance distribution of pixels in a surrounding area of a first type of defective pixel. FIGS. 10C and 10D are diagrams showing the luminance distribution of pixels in a surrounding area of a second type of defective pixel. FIGS. 10A and 10C are diagrams in which the luminance values of pixels are represented by shades of color (differences in hatching). FIGS. 10B and 10D are diagrams showing the relative outputs of the luminance distributions on the X-axes of FIGS. 10A and 10C.

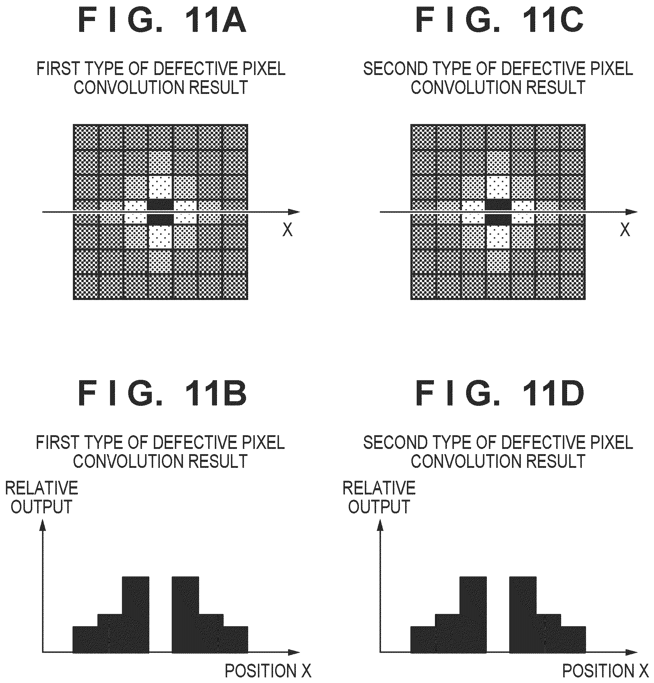

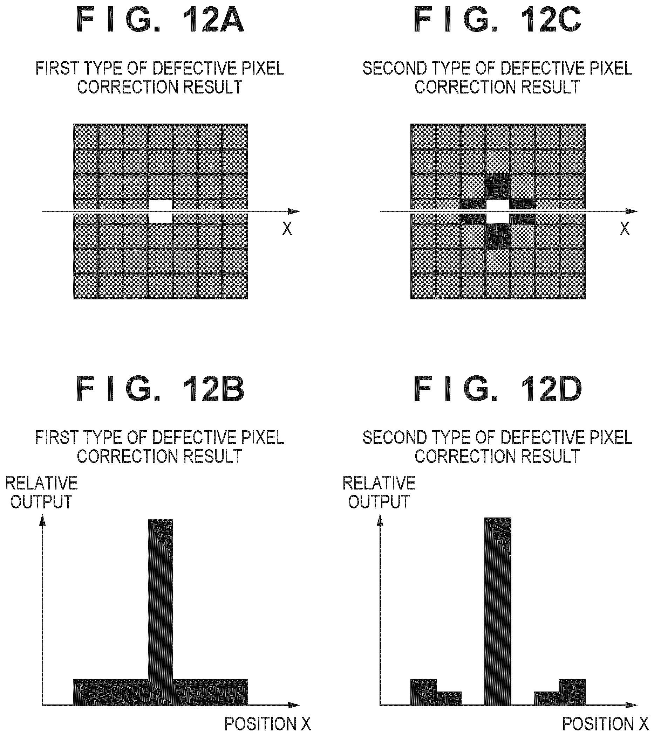

FIGS. 11A to 11D are diagrams illustrating an intermediate stage (second image) of signal processing (correction processing) in a comparative example. FIGS. 12A to 12D are diagrams illustrating the result (third image) of the signal processing (correction processing) in the comparative example. FIGS. 11A, 11C, 12A, and 12C are diagrams in which the luminance values of pixels are represented by shades of color (differences in hatching). FIGS. 11B, 11D, 12B, and 12D are diagrams showing the relative outputs of the luminance distributions on the X-axes of FIGS. 11A, 11C, 12A, and 12C.

FIGS. 11A and 11B are diagrams relating to a second image that is a result of performing a convolution operation on the first type of defective pixel by multiplying the second array data by a weighting coefficient of 1. As can be understood from the drawings, the second image shows the distribution of miscounting caused by light-emission crosstalk, which occurs due to the first type of defective pixel. Accordingly, by subtracting the second image from the first image for the pixels in the surrounding area of the first type of defective pixel, a third image can be generated in which the cluster defect caused by the first type of defective pixel is reduced, as shown in FIGS. 12A and 12B.

On the other hand, if a convolution operation is performed with a weighting coefficient of 1 on the second type of defective pixel in the same manner as on the first type of defective pixel, the image quality will end up deteriorating. FIGS. 11C and 11D are diagrams of a second image that is a result of performing a convolution operation on the second type of defective pixel by multiplying the second array data by a weighting coefficient of 1. As can be understood from the drawing, the second image shows the distribution of miscounting caused by light-emission crosstalk in the case where the second type of defective pixel is a pixel (first pixel) that causes miscounting caused by light-emission crosstalk.

However, since the second type of defective pixel is a defective pixel caused by the counter circuit 211, no miscounting caused by light-emission crosstalk actually occurs. As a result, subtracting the second image from the first image results in blackening in the surrounding area of the second type of defective pixel, as shown in the third image in FIGS. 12C and 12D. That is, image quality deteriorates due to erroneous correction using a weighting coefficient that is the same as that of the first type of defective pixel.

In the photoelectric conversion apparatus 300 of this embodiment, the occurrence of cluster defects caused by miscounting is reduced by increasing the weighting coefficient K1 of the convolution operation in the pixels in the surrounding area of the first type of defective pixel for which miscounting caused by light-emission crosstalk occurs in the pixels in the surrounding area. On the other hand, in the surrounding area of the second type of defective pixel for which miscounting caused by light-emission crosstalk does not occur in the pixels in the surrounding area, the weighting coefficient K2 of the convolution operation is reduced, thereby reducing the occurrence of blackening due to erroneous correction. In this manner, in this embodiment, by changing the weighting coefficient used in the correction processing between the pixels in the surrounding area of the first type of defective pixel and the pixels in the surrounding area of the second type of defective pixel, it is possible to suppress deterioration of image quality through correction of the pixels in the surrounding areas of the first type of defective pixel and the second type of defective pixel.

Pixels Other Than Defective Pixels

As described above, since light-emission crosstalk is caused by the avalanche phenomenon, light-emission crosstalk also occurs due to the avalanche phenomenon that occurs when a photon is incident on a pixel. Accordingly, the signal processing of FIG. 8 may be performed also on pixels in a surrounding area of a normal pixel, which are not pixels in the surrounding area of the first type of defective pixel nor pixels in the surrounding area of the second type of defective pixel.

Note that it is better to set the weighting coefficient of the correction processing for the pixels in the surrounding area of the normal pixel to be larger than the weighting coefficient of the correction processing for the pixels in the surrounding area of the first type of defective pixel. That is, normal pixels, the first type of defective pixels, and the second type of defective pixels may be classified in descending order of weighting coefficient. The reason for this is described below.

As described above, the occurrence probability of light-emission crosstalk can be predicted based on the pixel structure of the photoelectric conversion element. However, due to the influence of manufacturing variations and the like, the occurrence probability of light-emission crosstalk is not necessarily the same for all pixels.

In the case of a pixel whose output level difference with respect to the pixels in the surrounding area is small, the influence of that pixel on the pixels in the surrounding area during a convolution operation is about the same as the influence of the pixels in the surrounding area on the pixel, and therefore the influence of manufacturing variations is limited.

On the other hand, a pixel that has a higher output level than the pixels in the surrounding area, that is, the first type of defective pixel that causes a cluster defect, has a large influence on the pixels in the surrounding area during a convolution operation, and therefore the influence of manufacturing variations is large.

That is, in a pixel where the occurrence probability of light-emission crosstalk is low, the probability of light-emission crosstalk used during the convolution operation is higher than the light-emission crosstalk that actually occurs, and therefore blackening occurs in the pixels in the surrounding area of the cluster defect. On the other hand, with a pixel for which the occurrence probability of light-emission crosstalk is high, the probability of light-emission crosstalk used during the convolution operation is lower than the light-emission crosstalk that actually occurs, and therefore a residual defect occurs in the pixels in the surrounding area of the cluster defect. In particular, when blackening occurs, only the surrounding area of the defective pixel is blackened, which looks unnatural to a person's visual perception.

For this reason, it is better to suppress blackening by making the weighting coefficient for the pixels in the surrounding area of the first type of defective pixel smaller than for those in the surrounding area of a normal pixel, while further enhancing the effect of suppressing light-emission crosstalk in the normal pixel. Specifically, the weighting coefficient K1 for the pixels in the surrounding area of the first type of defective pixel may be set to about 0.5 to 0.9 times the weighting coefficient K3 for the normal pixel.

Since the influence of manufacturing variations is significant only for a pixel that has a higher output level than the pixels in the surrounding area, that is, the first type of defective pixel that causes a cluster defect, it is sufficient that the weighting coefficient K1 is set smaller than the weighting coefficient K3 only for the first type of defective pixel. In addition, since miscounting caused by the counter circuit 211 only occurs for the second type of defective pixel, it is sufficient that the weighting coefficient K2 for the second type of defective pixel is set smaller than the weighting coefficient K1.

That is, there may be only one pixel in the surrounding area of the first type of defective pixel, which is the first type of defective pixel itself, and there may be only one pixel in the surrounding area of the second type of defective pixel, which is the second type of defective pixel itself.

Weighting Coefficient K2

The weighting coefficient K2 for the second type of defective pixel may be changed depending on the ratio of the output value of the second type of defective pixel that is generated by a photon incident on a second pixel and the output value generated by miscounting caused by the counter circuit 211. If a large number of photons enter the second type of defective pixel, the ratio of the output value of the second type of defective pixel that is generated due to miscounting caused by the counter circuit 211 is small, and therefore it is better to set the weighting coefficient K2 closer to the weighting coefficient K1.

On the other hand, if a small number of photons enter the second type of defective pixel, most of the output value of the second type of defective pixel is generated due to miscounting caused by the counter circuit 211, and therefore it is better to have a smaller weighting coefficient K2. That is, the weighting coefficient K2 may be made smaller the larger the difference between the output value of the second type of defective pixel and the output values of the pixels in the surrounding area of the second type of defective pixel is. In particular, if the output value of the second type of defective pixel due to miscounting caused by the counter circuit 211 is greater than a predetermined output threshold value regardless of the output values of the pixels in the surrounding area of the second type of defective pixel, it is better to set the weighting coefficient K2 to 0, that is, it is better not to perform the second correction processing.

How to Change Weighting Coefficient of Convolution Operation

In step S403, to change the weighting coefficient of the convolution operation, the weighting coefficient for the second array data may be changed according to the pixel as shown in FIG. 9. Alternatively, a fourth image may be generated by multiplying the output value of each pixel of the first image by a weighting coefficient of a convolution operation, and the fourth image may be convolved with the second array data. In this case, the processing load can be reduced.

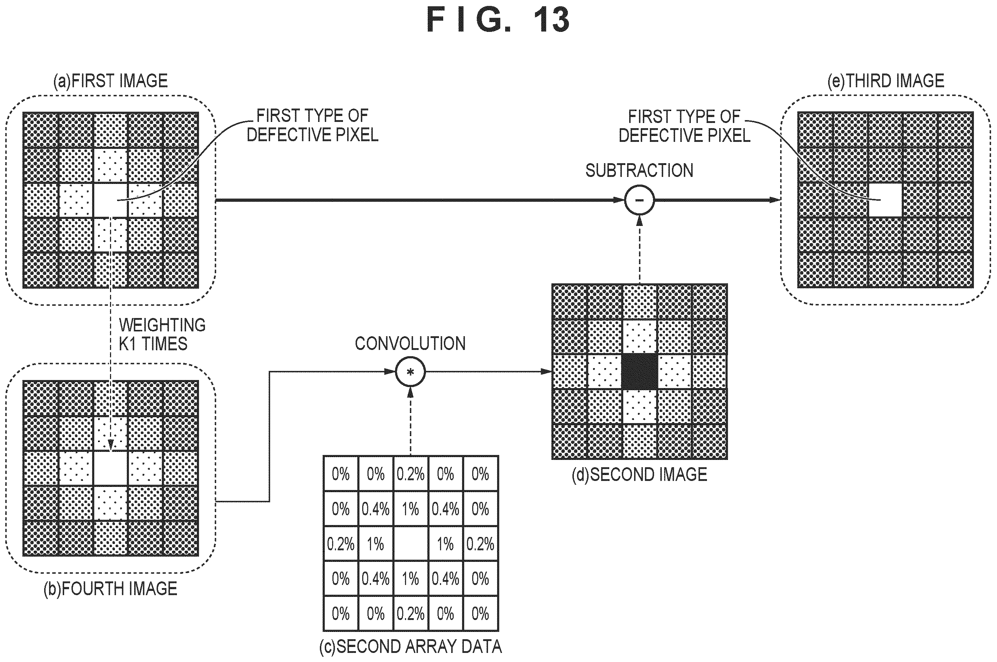

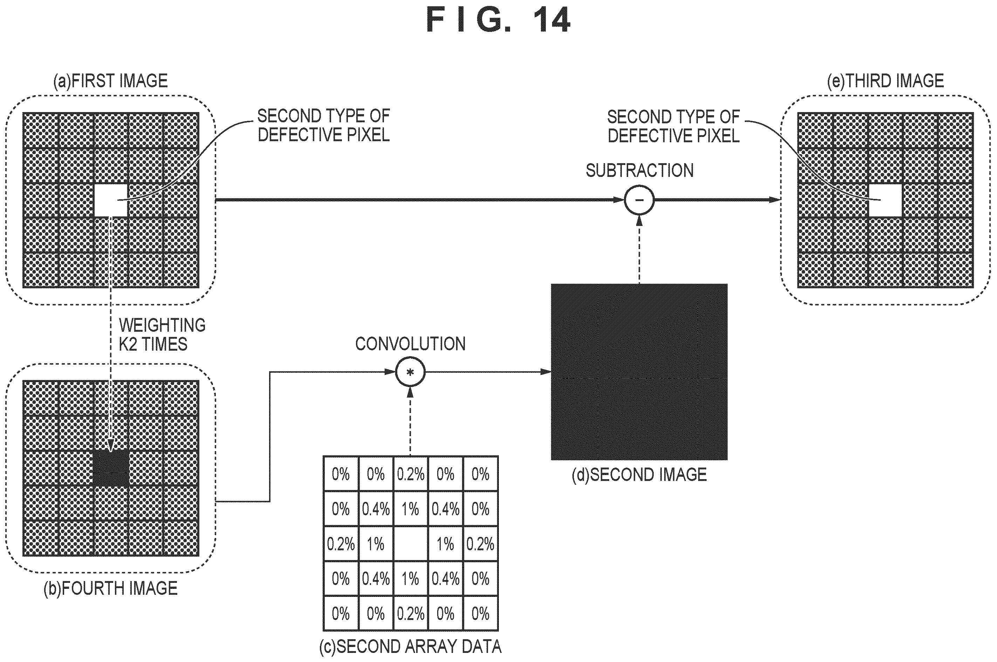

FIG. 13 are diagrams showing an example of change in an image in other first correction processing according to the first embodiment. FIG. 13 are diagrams relating to change in an image obtained by multiplying the surrounding area of a first type of defective pixel by a weighting coefficient K1. FIG. 14 are diagrams showing an example of change in an image in other second correction processing according to the first embodiment. FIG. 14 are diagrams relating to change in an image obtained by multiplying the surrounding area of the second type of defective pixel by a weighting coefficient K2.

FIGS. 13(a) and 14(a) are diagrams showing a first image. FIGS. 13(b) and 14(b) are diagrams showing the fourth image. FIGS. 13(c) and 14(c) are diagrams showing the second array data. FIGS. 13(d) and 14(d) are diagrams showing the second image. FIGS. 13(e) and 14(e) are diagrams showing the third image.

As shown in FIGS. 13 and 14, the correction processing unit 304 may generate the second image by multiplying the first image by a weighting coefficient and then executing a convolution operation with the second array data.

Specifically, as shown in FIG. 13, in the first correction processing, the correction processing unit 304 generates a fourth image by multiplying the first type of defective pixel in the first image and the pixels in the surrounding area of the defective pixel by the first weighting coefficient K1. The correction processing unit 304 generates the second image by performing a convolution operation on a fourth image using the second array data. The correction processing unit 304 generates a third image by subtracting the second image from the first image. FIG. 13 show an example in which the pixels in the surrounding area of the first type of defective pixel are the first type of defective pixel itself. That is, in FIG. 13, in the first correction processing, the first type of defective pixel in the first image is multiplied by the first weighting coefficient K1 to generate the fourth image.

As shown in FIG. 14, in the second correction processing, the correction processing unit 304 generates the fourth image by multiplying the second type of defective pixel and the pixels in the surrounding area of the defective pixel in the first image by the second weighting coefficient K2. The correction processing unit 304 generates the second image by performing a convolution operation on the fourth image using the second array data. The correction processing unit 304 generates the third image by subtracting the second image from the first image. FIG. 14 show an example in which the pixels in the surrounding area of the second type of defective pixel are the second type of defective pixel itself. That is, in FIG. 14, in the second correction processing, the second type of defective pixel in the first image is multiplied by the second weighting coefficient K2 to generate the fourth image.

Pattern of Defect Extraction

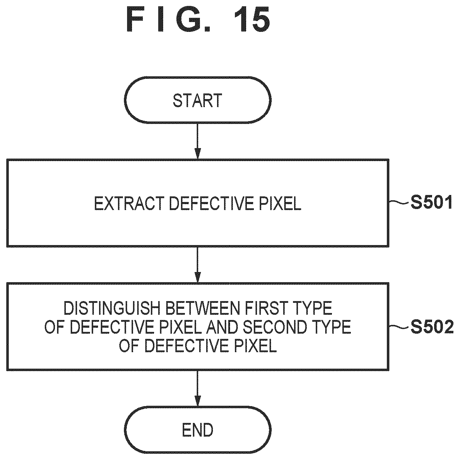

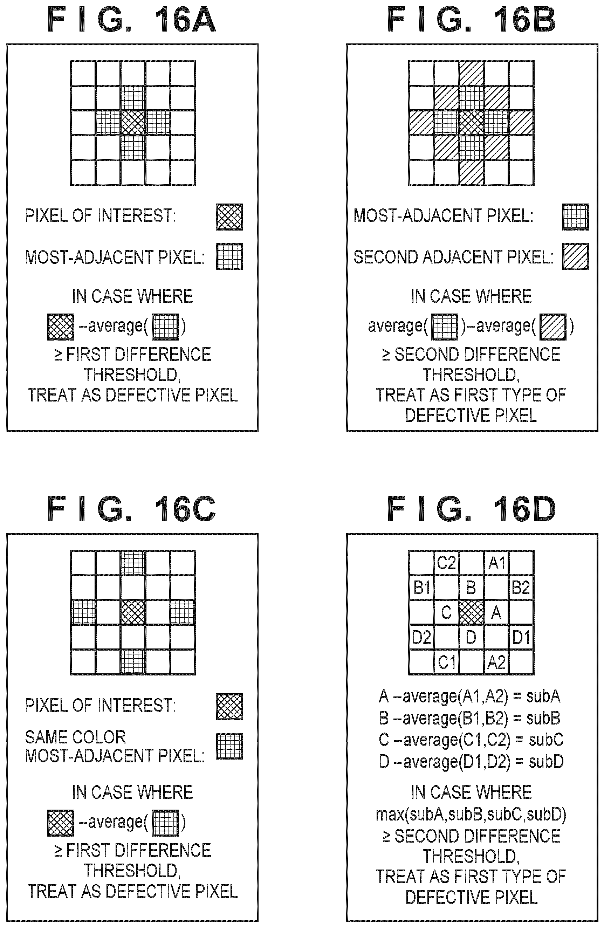

FIG. 8 shows an example in which the first type of defective pixel and the second type of defective pixel are extracted using address data in step S404, but the correction processing unit 304 may also extract defective pixels from the first image. Description is given below. FIG. 15 is a flowchart of defective pixel extraction processing. FIGS. 16A to 16D are diagrams showing the surrounding area of a pixel of interest, for illustrating the content of the defective pixel extraction processing.

First, in step S501, the correction processing unit 304 performs first defect extraction processing in which a pixel (also called a pixel of interest) having a higher output value than the pixels in the surrounding area is extracted, thereby extracting a first type of defective pixel and a second type of defective pixel together as defective pixels. Specifically, the correction processing unit 304 generates a fifth image by applying a median filter to the first image. Then, the correction processing unit 304 extracts, as the defective pixels, pixels for which the difference between the first image and the fifth image is greater than or equal to a first difference threshold.

FIG. 16A is a diagram illustrating first defect extraction processing for extracting defective pixels. As another extraction method, as shown in FIG. 16A, the correction processing unit 304 may calculate the average value of the output values of the pixels in the surrounding area of the pixel of interest (also called most-adjacent pixels), and extract, as defective pixels, pixels for which the difference between the average value and the output value of the pixel of interest is greater than or equal to a first difference threshold. Note that the correction processing unit 304 may also calculate the median (center value) instead of the average value of the output values of the most-adjacent pixels in the surrounding area of the pixel of interest, and extract a pixel for which the difference between the median and the output value of the pixel of interest is greater than or equal to a first difference threshold value as a defective pixel. The most-adjacent pixels referred to here are pixels adjacent to the central pixel of interest on the top, bottom, left and right sides.

Next, in step S502, the correction processing unit 304 performs second defect extraction processing for distinguishing between the first type of defective pixel and the second type of defective pixel. As described above, miscounting caused by light-emission crosstalk occurs in the first type of defective pixel, whereas miscounting caused by light-emission crosstalk does not occur in the second type of defective pixel. Accordingly, the correction processing unit 304 need only distinguish between defective pixels by determining whether or not the defective pixels are cluster defects.

FIG. 16B is a diagram illustrating second defect extraction processing for distinguishing between defective pixels. The most-adjacent pixels shown in FIG. 16B are pixels adjacent to the central pixel of interest on the top, bottom, left and right sides. Second adjacent pixels are pixels adjacent in the diagonal direction to the central pixel of interest, and pixels adjacent to the most-adjacent pixels on the sides opposite to the pixel of interest. In other words, the second adjacent pixels are the pixels that are the second-closest to the pixel of interest after the most-adjacent pixels. As shown in FIG. 16B, the correction processing unit 304 need only determine that a pixel for which the difference between the average output values of the most-adjacent pixels of the pixel of interest and the average value of the output values of the second adjacent pixels is greater than or equal to a second difference threshold is a first type of defective pixel. The correction processing unit 304 need only determine that a defective pixel for which the difference between the average value of the output values of the most-adjacent pixels to the pixel of interest and the average value of the output values of the second adjacent pixels to the pixel of interest is smaller than a second difference threshold value is a second type of defective pixel. This is because, as shown in FIGS. 10A to 10D, in the case of the first type of defective pixel, a difference in output levels occurs between the most-adjacent pixels and the second adjacent pixels of the defective pixel due to light-emission crosstalk. On the other hand, in the case of the second type of defective pixel, no difference in output level due to light-emission crosstalk occurs between the most-adjacent pixels and the second adjacent pixels of the defective pixel. That is, the second defect extraction processing is processing for distinguishing between the first type of defective pixel and the second type of defective pixel by comparing the output values or the average values of the output values between the pixels in the surrounding area of the pixel of interest.

If the defective pixel is the first type of defective pixel, the difference in output levels between the most-adjacent pixels and the second adjacent pixels of the defective pixel is determined using the product of the occurrence probability of light-emission crosstalk and the output value of the first type of defective pixel. Accordingly, the second difference threshold need only be determined based on both the first array data and the output value of the defective pixel extracted in step S501.

Extracting defective pixels and their output levels from the first image requires less memory for storing address data of defective pixels as opposed to using address data, and therefore the configuration of the photoelectric conversion apparatus 300 can be simplified. On the other hand, when extracting defective pixels from the first image without using address data, there is a possibility that defective pixels will be erroneously detected when imaging an object such as a bright spot, and therefore it is better to use address data in order to accurately extract defective pixels.

Correcting Defective Pixels by Interpolation

As described above, the signal processing in the photoelectric conversion apparatus of the present embodiment is signal processing for suppressing miscounting caused by light-emission crosstalk. Accordingly, as shown in FIGS. 9, 13, and 14, the first type of defective pixel and the second type of defective pixel themselves remain as defective pixels even after signal processing. Accordingly, after step S404 in FIG. 8, the correction processing unit 304 may perform defect interpolation processing for correcting the first type of defective pixel and the second type of defective pixel. As defect interpolation processing, the correction processing unit 304 need only replace the output value of a defective pixel with the average value or median of the output values of the pixels in the surrounding area.

Color Sensor

The photoelectric conversion element 100 may be a monochrome sensor that does not have an on-chip color filter, or may be a so-called color sensor that has at least two or more types of pixels with different spectral characteristics. In the case of a color sensor, the correction processing unit 304 may change the correction processing for each pixel having different spectral characteristics. Specifically, the correction processing unit 304 may change either the size of the array data used in the convolution operation for each pixel having different spectral characteristics, or the weighting coefficient.

In addition, in step S404, when extracting defective pixels from the first image, the correction processing unit 304 may extract a first type of defective pixel and a second type of defective pixel for each pixel having different spectral characteristics. For example, in the case of a so-called Bayer array color sensor, in step S501, as shown in FIG. 16C, the correction processing unit 304 may extract defective pixels (here including a first type of defective pixel and a second type of defective pixel) by comparing the pixel of interest with the most-adjacent pixel having the same spectral characteristics (same color) as the pixel of interest.

In step S502, as shown in FIG. 16D, the correction processing unit 304 may distinguish between the first type of defective pixel and the second type of defective pixel by comparing the most-adjacent pixel, which includes a pixel having spectral characteristics different from that of the pixel of interest determined to be the defective pixel, with a second adjacent pixel having the same spectral characteristics as the most-adjacent pixel.

In FIG. 16D, if the maximum value of the difference between the pixel of interest and the average value of second adjacent pixels having the same spectral characteristics as the most-adjacent pixel is greater than or equal to a second difference threshold, the correction processing unit 304 determines the pixel of interest to be the first type of defective pixel, and otherwise determines the pixel of interest to be the second type of defective pixel. Note that if the average value of the differences between the pixel of interest and the second adjacent pixels having the same spectral characteristics as the most-adjacent pixel is greater than or equal to a second difference threshold, the correction processing unit 304 may determine that the pixel of interest is the first type of defective pixel, and determine other pixels of interest as the second type of defective pixels. Alternatively, the correction processing unit 304 may also use the values of third adjacent pixels that are adjacent to the second adjacent pixels to distinguish whether the defective pixel is the first type of defective pixel or the second type of defective pixel.

As described above, in the first embodiment, different correction processing is performed on pixels in a surrounding area of a first type of defective pixel and pixels in a surrounding area of a second type of defective pixel, which have different causes. As a result, in the first embodiment, in the photoelectric conversion apparatus 300 having the APD 201, it is possible to correct pixels in a surrounding area of a defective pixel while suppressing deterioration of image quality.

Second Embodiment

Clock Driven Type

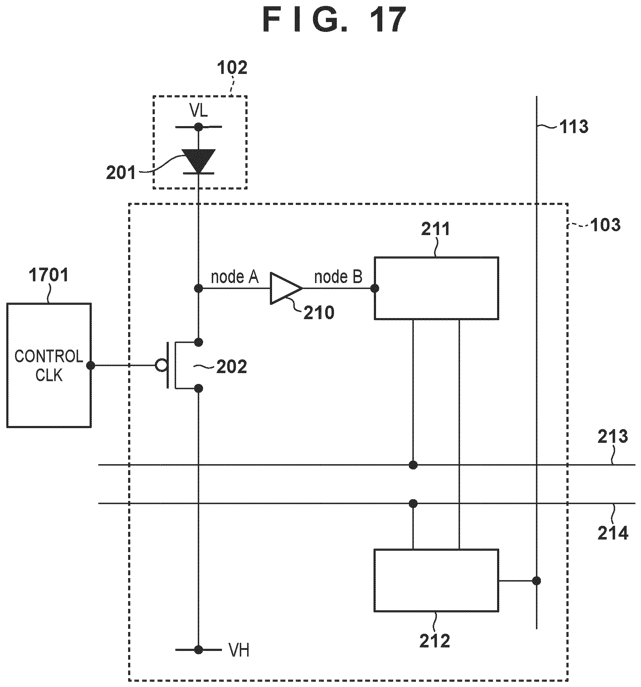

The photoelectric conversion apparatus according to the second embodiment differs from the photoelectric conversion apparatus according to the first embodiment in the method for driving the photoelectric conversion element. FIG. 17 is a diagram showing an equivalent circuit of a photoelectric conversion unit and a signal processing circuit of a pixel according to the second embodiment. Specifically, as shown in FIG. 17, in the photoelectric conversion apparatus shown in the second embodiment, the quench element 202 is constituted by a MOS transistor. The switching on and off of the quench element 202 is controlled by a control signal CLK input to the gate of the quench element 202. The control signal CLK is controlled by a signal generation unit 1701 in the control pulse generation unit 115. The signal generation unit 1701 is connected to the gate of the quench element 202.

Description of Clock Driving

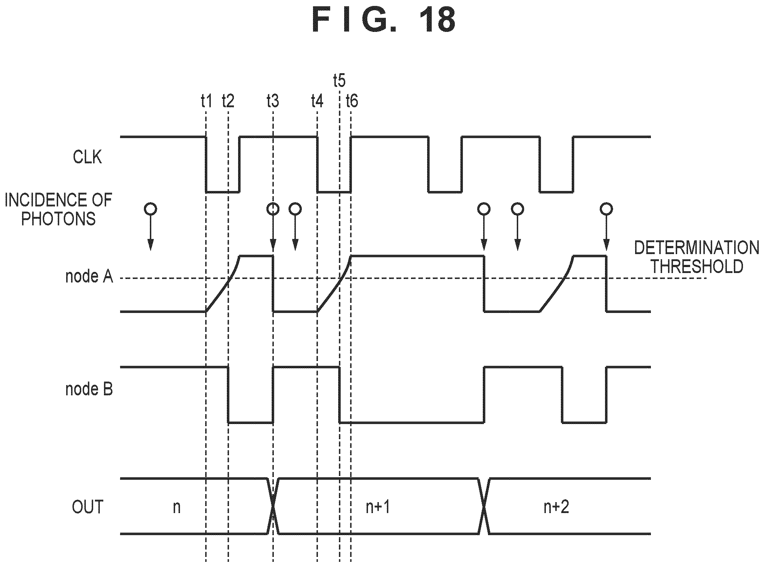

FIG. 18 is a timing chart of the photoelectric conversion element according to the second embodiment. Specifically, FIG. 18 is a timing chart schematically showing the relationship between the control signal CLK input to the quench element 202, the voltage of node A, the voltage of node B, and the output signal. In the photoelectric conversion element of the second embodiment, when the control signal CLK is at a high level, the driving voltage VH is not easily supplied to the APD 201. On the other hand, when the control signal CLK is at a low level, the driving voltage VH is supplied to the APD 201. The high level of the control signal CLK is, for example, 1 V, and the low level of the control signal CLK is, for example, 0 V.

When the control signal CLK is at the high level, the quench element 202 serving as a switch is switched off, and when the control signal CLK is at the low level, the quench element 202 is switched on. The resistance value of the quench element 202 when the control signal CLK is at the high level is higher than the resistance value of the quench element 202 when the control signal CLK is at the low level. When the control signal CLK is at the high level, even if avalanche multiplication occurs in the APD 201, the recharge operation is unlikely to occur, and therefore the voltage supplied to the APD 201 is a voltage less than or equal to the breakdown voltage of the APD 201. Accordingly, the avalanche multiplication operation in the APD 201 stops.

At time t1, the control signal CLK changes from the high level to the low level, whereby the quench element 202 is switched on and the recharge operation of the APD 201 is started. This causes the voltage of the cathode of the APD 201 to transition to the high level. The voltage of the cathode is the same as that of node A. Then, the voltage difference between the voltages applied to the anode and the cathode of the APD 201 becomes capable of avalanche multiplication. That is, when the voltage of the cathode transitions from the low level to the high level, the voltage of node A becomes greater than or equal to a determination threshold at time t2. At this time, the pulse signal output from node B is inverted and goes from the high level to the low level. When the recharge is complete, the APD 201 is in a state where the voltage difference of the driving voltage VH - the driving voltage VL is applied. Thereafter, the control signal CLK goes to the high level, and the quench element 202 is switched off.

Next, at time t3, when a photon is incident on the APD 201, avalanche multiplication occurs in the APD 201, an avalanche multiplication current flows through the quench element 202, and the voltage of the cathode drops. That is, the voltage of node A drops. When the voltage of node A becomes lower than the determination threshold while the voltage of node A is dropping, the voltage of node B goes from the low level to the high level. That is, the portion of the output waveform at node A that exceeds the determination threshold is waveform-shaped by the waveform shaping unit 210 and the result is output as a signal from node B. The output signal is then counted by the counter circuit 211. That is, the count value of the counter signal output from the counter circuit 211 is increased by 1 least significant bit (LSB).

Between time t3 and time t4, photons are incident on the APD 201, but since the quench element 202 is in the off state and the voltage applied to the APD 201 does not have a voltage difference that allows avalanche multiplication, the voltage level of node A does not exceed the determination threshold.

At time t4, the control signal CLK changes from the high level to the low level, and the quench element 202 is switched on. As a result, current that compensates for the voltage drop from driving voltage VL flows to node A, and the voltage of node A transitions to the high level. At this time, the voltage of node A becomes greater than or equal to the determination threshold at time t5, and therefore the pulse signal of node B is inverted and goes from the high level to the low level.

At time t6, node A is stabilized at the high level, and the control signal CLK goes from the low level to the high level. Thereafter, as described from time t1 to time t6, the voltages of the nodes, signal lines, and the like change in response to the control signal CLK and the incidence of photons.

In this way, in the second embodiment, the recharge frequency of the APD 201 can be controlled by applying the control signal CLK to the quench element 202 to switch the quench element 202 on and off. If the control signal CLK is not used, there is a problem in that the actual count value becomes smaller than the count value corresponding to the luminance of the incident light when the luminance is high. However, in the second embodiment, this problem can be solved by applying the control signal CLK to the quench element 202 to switch the quench element 202 on and off.

However, when the recharge frequency of the APD 201 is controlled by the control signal CLK, the relationship between the number of input signals and the number of output signals is not linear. If the influence of light-emission crosstalk is ignored, the relationship between the number of input signals and the number of output signals can theoretically be derived. Specifically, letting the number of input signals be Nph, the number of output signals be Nct, the frequency of the control signal CLK (the inverse of the number of CLKs per unit time) be f, and the length of the exposure period be T, the number of output signals Nct is described by the following equation (1).

$$\text{Nct} = fT \left( 1 - e^{-\frac{Nph}{fT}} \right) \qquad (1)$$

In the photoelectric conversion apparatus according to the second embodiment, correction processing is carried out which can simultaneously reduce the influence of the nonlinear response caused by the control signal CLK and the influence of miscounting caused by crosstalk. Description is given below.

Flowchart

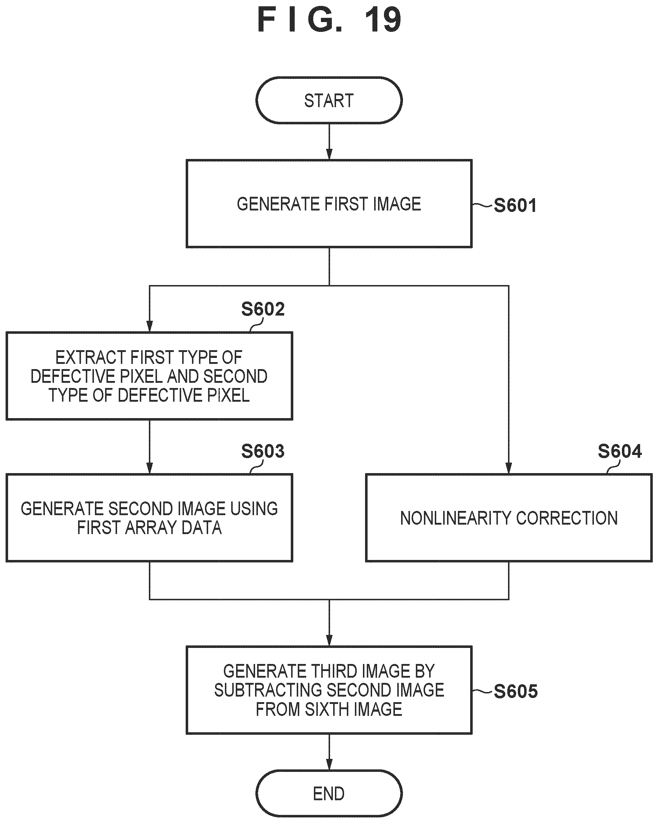

FIG. 19 is a flowchart of signal processing in the photoelectric conversion apparatus of the second embodiment. The following will mainly describe the steps that are different from the flowchart in FIG. 8.

First, similarly to FIG. 8, in step S601, the image generation unit 303 generates a first image.

In step S602, the correction processing unit 304 extracts a first type of defective pixel and a second type of defective pixel.

Next, in step S603, similarly to step S403, a second image is generated by performing correction processing using the first array data on the first image. In this step, similarly to the first embodiment, the correction processing unit 304 sets the weighting coefficient for the correction processing for the second type of defective pixel to be smaller than the weighting coefficient for the correction processing for the first type of defective pixel.

In the photoelectric conversion apparatus of the second embodiment, the correction processing unit 304 branches to steps S602 and S603, and executes nonlinearity correction processing in step S604. In step S604, the correction processing unit 304 performs nonlinearity correction processing, which is correction of nonlinearity, on the first image in order to return the nonlinear response generated by the control signal CLK to linearity and generates a sixth image. Specifically, it is sufficient that the correction processing unit 304 uses the following equation (2) to obtain the number of input signals Nph from the number of output signals Nct.

$$\text{Nph} = -fT \times \ln \left( \frac{1 - Nct}{fT} \right) \qquad (2)$$

Then, in step S605, the correction processing unit 304 generates a third image by subtracting the second image from the sixth image. As described above, the second image is a signal representing miscounting caused by light-emission crosstalk, and therefore the third image is an image obtained by restoring the signal that would have been obtained if no miscounting caused by light-emission crosstalk had occurred. That is, by performing the processing in steps S603 to S605, the second embodiment can simultaneously reduce the influence of the nonlinear response caused by the control signal CLK and the influence of miscounting caused by crosstalk.

Third Embodiment

Photoelectric Conversion System

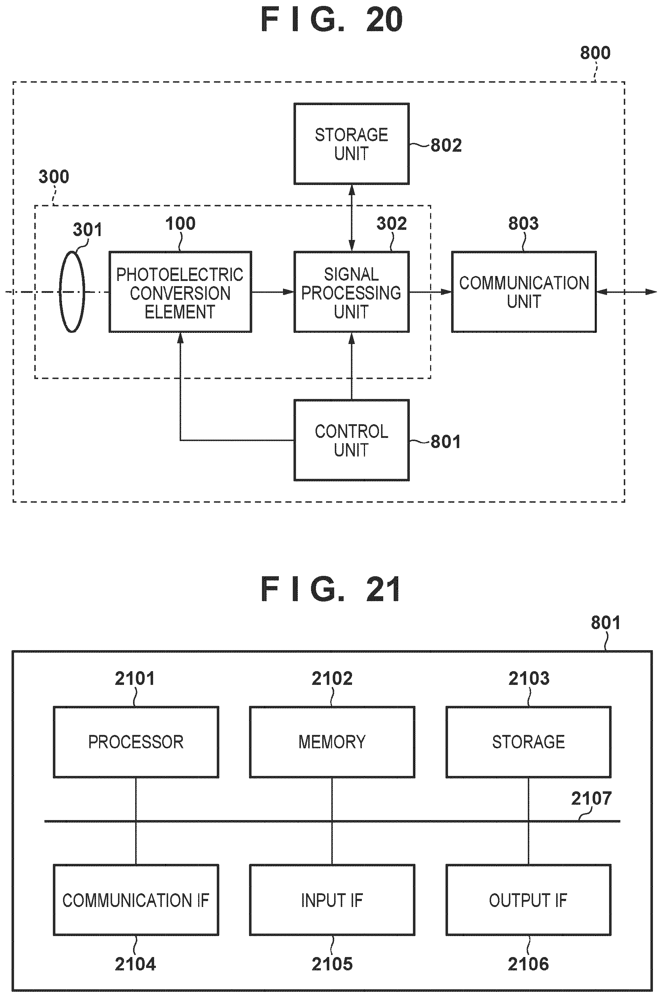

FIG. 20 is a block diagram showing the overall configuration of a photoelectric conversion system according to the third embodiment. The photoelectric conversion system of the third embodiment includes the photoelectric conversion apparatus according to the first embodiment or the second embodiment. The photoelectric conversion system 800 includes a photoelectric conversion apparatus 300 having a photoelectric conversion element 100, a control unit 801, a storage unit 802, and a communication unit 803.

The photoelectric conversion element 100 captures an optical image formed by the image forming optical system 301 and outputs an electrical signal.

The signal processing unit 302 generates an image from the signal output from the photoelectric conversion element 100, and in addition to performing correction processing on the image, performs processing such as black level correction, gamma curve adjustment, noise reduction, and data compression to generate a final image. If the photoelectric conversion element 100 has an on-chip RGB color filter, the signal processing unit 302 may also perform processing such as white balance correction and color conversion.

The control unit 801 functions as a computer and controls the operation of each unit of the photoelectric conversion system 800 based on a computer program. Also, the control unit 801 controls the length of the exposure period of each frame of the photoelectric conversion element 100, the timing of the control signal CLK, and the like via a control pulse generation unit of the photoelectric conversion element 100. The specific hardware configuration of the control unit 801 will be described later.

The storage unit 802 includes, for example, a recording medium such as a memory card or a hard disk. The communication unit 803 includes a wireless or wired interface, outputs the generated image to the outside of the photoelectric conversion system 800, and receives signals from the outside.

FIG. 21 is a block diagram showing a hardware configuration of the control unit 801. The control unit 801 is an example of a computer. The control unit 801 includes a processor 2101, a memory 2102, a storage 2103, a communication IF 2104, an input IF 2105, an output IF 2106, and a bus 2107. The processor 2101, the memory 2102, the storage 2103, the communication IF 2104, the input IF 2105, and the output IF 2106 are connected via the bus 2107 so as to be able to transmit and receive information to and from each other.

The processor 2101 is an arithmetic processing apparatus, such as a central processing unit (CPU). Note that the control unit 801 may also have other processors such as a micro processing unit (MPU), a graphics processing unit (GPU), and a quantum processing unit (QPU) instead of or in addition to the CPU. The processor 2101 reads out programs stored in the storage 2103 and deploys them to the memory 2102 to realize various functions. For example, the processor 2101 may realize some or all of the functions of the image generation unit 303 and the correction processing unit 304 of the signal processing unit 302 by loading a program. Note that some or all of the functions of the image generation unit 303 and the correction processing unit 304 of the signal processing unit 302 may also be realized by one or more circuits such as an application specific integrated circuit (ASIC) and a field programmable gate array (FPGA).

The memory 2102 is, for example, a high-speed readable and writable storage apparatus such as a random access memory (RAM). The memory 2102 functions as a work area when the processor 2101 executes a program. The memory 2102 temporarily stores programs and parameters necessary for executing the programs.

The storage 2103 is, for example, a non-volatile storage apparatus such as a hard disk drive (HDD) or a solid state drive (SSD). The storage 2103 holds programs, parameters required for executing the programs, results of executing the programs, and the like even when power is not supplied. The storage 2103 stores, for example, the image data output by the signal processing unit 302, the first array data, the weighting coefficients, and the like. Note that the storage 2103 may also function as the storage unit 802.

The communication IF 2104 is an interface for realizing communication with an external apparatus via a wired or wireless network. The communication IF 2104 may also function as the communication unit 803.

The input IF 2105 is an interface for receiving input of information from an input device. The input device is, for example, a mouse, a keyboard, or a touch panel.

The output IF 2106 is an interface for outputting information to an external apparatus. The external apparatus is, for example, an image display apparatus such as a display.

Note that a computer program for realizing some or all of the control in the present embodiment and the functions of the above-described embodiments may be supplied to the photoelectric conversion apparatus via a network or various types of storage media. Then, a computer (or a CPU, MPU, or the like) in the photoelectric conversion apparatus may read out and execute the program. In this case, the program and the storage medium in which the program is stored constitute the present disclosure.

Other Embodiments

In the above-described embodiment, an example was given in which the correction processing unit generates a plurality of different pieces of second array data from the first array data using a plurality of different weighting coefficients and executes the correction processing, but the method of the correction processing is not limited to this. For example, the correction processing unit may also execute the correction processing based on a plurality of pieces of second array data that are set in advance.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1. A processing apparatus for generating and correcting an image based on a count value output by a photoelectric conversion element that has an avalanche photodiode, converts light from a subject into an electrical signal, counts the electrical signal, and outputs the count value,

   an image generate means (303) configured to generate a first image based on the count value, and
   a correction processing means (304) configured to execute correction processing for correcting the first image,

   wherein the correction processing includes

   first correction processing for a first pixel including a pixel in a surrounding area of a first type of defective pixel in which miscounting occurs due to a first cause, and
   second correction processing different from the first correction processing for a second pixel including a pixel in a surrounding area of a second type of defective pixel in which miscounting occurs due to a second cause different from the first cause.

2. The processing apparatus according to claim 1,

   wherein in the correction processing,
   the first correction processing is executed using a first weighting coefficient, and
   the second correction processing is executed using a second weighting coefficient different from the first weighting coefficient.

3. The processing apparatus according to claim 1,
   wherein in the correction processing, the first correction processing and the second correction processing are executed based on first array data of a two-dimensional array in which a position of the first pixel and the second pixel is

**EP 4 654 603 A1**

associated with a correction value for correcting the pixels.

4. The processing apparatus according to claim 3,
wherein in the correction processing, a second image is generated by executing a convolution operation on the first image using array data obtained by multiplying second array data by a weighting coefficient, the second array data being generated from the first array data.

5. The processing apparatus according to claim 4,

wherein in the correction processing,
in the first correction processing, the second array data is multiplied by a first weighting coefficient, and
in the second correction processing, the second array data is multiplied by a second weighting coefficient different from the first weighting coefficient.

6. The processing apparatus according to claim 5,

wherein in the correction processing,
in the first correction processing, a third image is generated by subtracting the first pixel of the second image from the first pixel of the first image, and
in the second correction processing, a third image is generated by subtracting the second pixel of the second image from the second pixel of the first image.

7. The processing apparatus according to claim 3,
wherein in the correction processing, a second image is generated by executing convolution operation processing using second array data generated from the first array data on a fourth image generated by multiplying a pixel of the first image by a weighting coefficient.

8. The processing apparatus according to claim 2,
wherein the larger the difference between an output value of the second type of defective pixel and an output value of the second pixel other than the second type of defective pixel is, the smaller the second weighting coefficient in the second correction processing is.

9. The processing apparatus according to claim 1,
wherein in the correction processing, if an output value of the second type of defective pixel is greater than a predetermined output threshold value, the second correction processing is not executed.

10. The processing apparatus according to claim 3,
wherein the first array data includes the correction value obtained based on an occurrence probability of miscounting caused by light-emission crosstalk.

11. The processing apparatus according to claim 1,
wherein the first type of the defective pixel has a higher occurrence probability of miscounting caused by light-emission crosstalk than the second type of defective pixel.

12. The processing apparatus according to claim 2,
wherein the second weighting coefficient is smaller than the first weighting coefficient.

13. The processing apparatus according to claim 1,
wherein in the correction processing, the first type of defective pixel and the second type of defective pixel are extracted based on address data acquired in advance.

14. The processing apparatus according to claim 1,
wherein the correction processing includes

first defect extraction processing for extracting a defective pixel by comparing an output value of a pixel with output values of pixels in a surrounding area of the pixel using the first image, and
second defect extraction processing for distinguishing between the first type of defective pixel and the second type of defective pixel by comparing output values between a plurality of pixels in the surrounding area of the

16

defective pixel.

**15.** The processing apparatus according to claim 1,
wherein in the correction processing, output values of the first type of defective pixel and the second type of defective pixel are corrected based on output values of pixels in the surrounding area of the first type of defective pixel and pixels in the surrounding area of the second type of defective pixel.

**16.** The processing apparatus according to claim 3,
wherein the correction processing executes third correction processing different from the first correction processing and the second correction processing on a normal pixel other than the first type of defective pixel and the second type of defective pixel.

**17.** The processing apparatus according to claim 16,
wherein the correction processing executes the third correction processing using a third weighting coefficient that is greater than the first weighting coefficient used in the first correction processing.

**18.** The processing apparatus according to claim 1,

wherein the pixels include two or more types of pixels having different spectral characteristics, and
the correction processing is executed using a different weighting coefficient for each of the pixels having the different spectral characteristics.

**19.** A processing method for generating and correcting an image based on a count value output by a photoelectric conversion element that has an avalanche photodiode, converts light from a subject into an electrical signal, counts the electric signal, and outputs the count value, the processing method comprising:

generating a first image based on the count value; and
executing correction processing for correcting the first image,
wherein the correction processing includes

first correction processing for a first pixel including a pixel in a surrounding area of a first type of defective pixel in which miscounting occurs due to a first cause, and
second correction processing different from the first correction processing for a second pixel including a pixel in a surrounding area of a second type of defective pixel in which miscounting occurs due to a second cause different from the first cause.

**20.** A computer program comprising instructions which, when the program is executed by a computer, cause the computer to carry out the method of claim 19.

# F I G. 1

# F I G. 2

# F I G. 3

# F I G. 4

# F I G. 5

INCIDENCE
OF PHOTONS

node A

DETERMINATION
THRESHOLD

node B

t0    t1  t2    t3

# F I G. 6

# F I G. 7

| | | | | |
|---|---|---|---|---|
| 0% | 0% | 0.2% | 0% | 0% |
| 0% | 0.4% | 1% | 0.4% | 0% |
| 0.2% | 1% | 100% | 1% | 0.2% |
| 0% | 0.4% | 1% | 0.4% | 0% |
| 0% | 0% | 0.2% | 0% | 0% |

# F I G. 8

START

GENERATE FIRST IMAGE — S401

EXTRACT FIRST TYPE OF DEFECTIVE PIXEL
AND SECOND TYPE OF DEFECTIVE PIXEL — S402

GENERATE SECOND IMAGE USING
FIRST ARRAY DATA — S403

GENERATE THIRD IMAGE BY SUBTRACTING
SECOND IMAGES FROM FIRST IMAGES — S404

END

# FIG. 9

(a) FIRST IMAGE

SURROUNDING AREA OF SECOND TYPE OF DEFECTIVE PIXEL

SURROUNDING AREA OF FIRST TYPE OF DEFECTIVE PIXEL

CONVOLUTION

SUBTRACTION

CONVOLUTION

K2 TIMES

K1 TIMES

| 0% | 0% | 0.2% | 0% | 0% |
|---|---|---|---|---|
| 0% | 0.4% | 1% | 0.4% | 0% |
| 0.2% | 1% | | 1% | 0.2% |
| 0% | 0.4% | 1% | 0.4% | 0% |
| 0% | 0% | 0.2% | 0% | 0% |

(b) SECOND ARRAY DATA

(c) CONVOLUTION RESULT SECOND IMAGE

SURROUNDING AREA OF SECOND TYPE OF DEFECTIVE PIXEL

(d) CONVOLUTION RESULT SECOND IMAGE

SURROUNDING AREA OF FIRST TYPE OF DEFECTIVE PIXEL

(e) THIRD IMAGE

SURROUNDING AREA OF SECOND TYPE OF DEFECTIVE PIXEL

SURROUNDING AREA OF FIRST TYPE OF DEFECTIVE PIXEL

EP 4 654 603 A1

# F I G. 10A

FIRST TYPE OF DEFECTIVE PIXEL

# F I G. 10C

SECOND TYPE OF DEFECTIVE PIXEL

# F I G. 10B

FIRST TYPE OF DEFECTIVE PIXEL

# F I G. 10D

SECOND TYPE OF DEFECTIVE PIXEL

# F I G. 11A

FIRST TYPE OF DEFECTIVE PIXEL
CONVOLUTION RESULT

# F I G. 11C

SECOND TYPE OF DEFECTIVE PIXEL
CONVOLUTION RESULT

# F I G. 11B

FIRST TYPE OF DEFECTIVE PIXEL
CONVOLUTION RESULT

# F I G. 11D

SECOND TYPE OF DEFECTIVE PIXEL
CONVOLUTION RESULT

# F I G. 12A

FIRST TYPE OF DEFECTIVE PIXEL
CORRECTION RESULT

X

# F I G. 12C

SECOND TYPE OF DEFECTIVE PIXEL
CORRECTION RESULT

X

# F I G. 12B

FIRST TYPE OF DEFECTIVE PIXEL
CORRECTION RESULT

RELATIVE
OUTPUT

POSITION X

# F I G. 12D

SECOND TYPE OF DEFECTIVE PIXEL
CORRECTION RESULT

RELATIVE
OUTPUT

POSITION X

F I G. 13

(a)FIRST IMAGE

(b)FOURTH IMAGE

(c)SECOND ARRAY DATA

(d)SECOND IMAGE

(e)THIRD IMAGE

FIRST TYPE OF DEFECTIVE PIXEL

WEIGHTING K1 TIMES

CONVOLUTION

SUBTRACTION

# FIG. 14

(a)FIRST IMAGE

SECOND TYPE OF
DEFECTIVE PIXEL

SECOND TYPE OF
DEFECTIVE PIXEL

(e)THIRD IMAGE

SUBTRACTION

WEIGHTING
K2 TIMES

CONVOLUTION

(d)SECOND IMAGE

(b)FOURTH IMAGE

| 0% | 0% | 0.2% | 0% | 0% |
|------|------|------|------|------|
| 0% | 0.4% | 1% | 0.4% | 0% |
| 0.2% | 1% | | 1% | 0.2% |
| 0% | 0.4% | 1% | 0.4% | 0% |
| 0% | 0% | 0.2% | 0% | 0% |

(c)SECOND ARRAY DATA

EP 4 654 603 A1

# F I G. 15

```
        ┌─────────────┐
        │    START    │
        └──────┬──────┘
               │
               ▼
┌──────────────────────────────────┐
│                                  │
│      EXTRACT DEFECTIVE PIXEL     │──S501
│                                  │
└──────────────┬───────────────────┘
               │
               ▼
┌──────────────────────────────────┐
│    DISTINGUISH BETWEEN FIRST TYPE │
│ OF DEFECTIVE PIXEL AND SECOND TYPE│──S502
│       OF DEFECTIVE PIXEL          │
└──────────────┬───────────────────┘
               │
               ▼
        ┌─────────────┐
        │     END     │
        └─────────────┘
```

# F I G. 16A

PIXEL OF INTEREST:

MOST-ADJACENT PIXEL:

IN CASE WHERE

$\boxtimes$ −average( ) ≥ FIRST DIFFERENCE THRESHOLD, TREAT AS DEFECTIVE PIXEL

# F I G. 16B

MOST-ADJACENT PIXEL:

SECOND ADJACENT PIXEL:

IN CASE WHERE

average( )−average( ) ≥ SECOND DIFFERENCE THRESHOLD, TREAT AS FIRST TYPE OF DEFECTIVE PIXEL

# F I G. 16C

PIXEL OF INTEREST:

SAME COLOR MOST-ADJACENT PIXEL:

IN CASE WHERE

$\boxtimes$ −average( ) ≥ FIRST DIFFERENCE THRESHOLD, TREAT AS DEFECTIVE PIXEL

# F I G. 16D

|    | C2 |    | A1 |    |
|----|----|----|----|----|
| B1 |    | B  |    | B2 |
|    | C  | ⊠  | A  |    |
| D2 |    | D  |    | D1 |
|    | C1 |    | A2 |    |

A −average(A1,A2) = subA
B −average(B1,B2) = subB
C −average(C1,C2) = subC
D −average(D1,D2) = subD

IN CASE WHERE
max(subA,subB,subC,subD) ≥ SECOND DIFFERENCE THRESHOLD, TREAT AS FIRST TYPE OF DEFECTIVE PIXEL

# F I G. 17

# FIG. 18

t1 t2  t3  t4  t5 t6

CLK

INCIDENCE OF
PHOTONS

node A

DETERMINATION
THRESHOLD

node B

OUT

n            n+1            n+2

EP 4 654 603 A1

# F I G. 19

```
                    ┌──────────────┐
                    │    START     │
                    └──────┬───────┘
                           │
                           ▼
          ┌────────────────────────────────┐
          │     GENERATE FIRST IMAGE       │─── S601
          └────────────────┬───────────────┘
                           │
        ┌──────────────────┴────────────────────┐
        │          S602                          │
        ▼                                        │
  ┌──────────────────────────┐                   │
  │  EXTRACT FIRST TYPE OF    │                   │
  │  DEFECTIVE PIXEL AND      │                   │
  │  SECOND TYPE OF           │                   │
  │  DEFECTIVE PIXEL          │                   │
  └────────────┬─────────────┘                   │
               │        S603                 S604 │
               ▼                                  ▼
  ┌──────────────────────────┐      ┌──────────────────────────┐
  │ GENERATE SECOND IMAGE    │      │                          │
  │ USING FIRST ARRAY DATA   │      │  NONLINEARITY CORRECTION │
  └────────────┬─────────────┘      └────────────┬─────────────┘
               │                                 │
               └────────────────┬────────────────┘
                                ▼
              ┌──────────────────────────────────┐
              │   GENERATE THIRD IMAGE BY        │─── S605
              │   SUBTRACTING SECOND IMAGE       │
              │   FROM SIXTH IMAGE               │
              └────────────────┬─────────────────┘
                               ▼
                        ┌──────────────┐
                        │     END      │
                        └──────────────┘
```

# FIG. 20

```
                                            ┌─────────┐
                                            │ STORAGE │─ 802
                                            │  UNIT   │
                                            └────┬────┘
                                                 ↕
┌300─ ─ ─ ─ ─ ─ ─ ─ ─ ─ ─ ─ ─ ─ ─ ─ ─ ─ ─ ─ ─ ─ ─ ─ ┐
                                                        800
   301      100              302             803
  ┌──┐  ┌──────────┐   ┌──────────┐   ┌──────────────┐
  │  │→ │PHOTOELECTRIC│→ │  SIGNAL  │→ │ COMMUNICATION │ →
  │  │  │CONVERSION │   │PROCESSING│   │     UNIT      │
  │  │  │ ELEMENT  │   │   UNIT   │   └──────────────┘
  └──┘  └──────────┘   └──────────┘
              ↑            ↑
              └────┬───────┘
              ┌─────────┐
              │ CONTROL │─ 801
              │  UNIT   │
              └─────────┘
```

# FIG. 21

```
                                                    801
 2101              2102              2103
┌──────────┐   ┌──────────┐   ┌──────────┐
│PROCESSOR │   │  MEMORY  │   │ STORAGE  │
└────┬─────┘   └────┬─────┘   └────┬─────┘
     │              │              │        2107
─────┼──────────────┼──────────────┼──────
     │              │              │
┌──────────┐   ┌──────────┐   ┌──────────┐
│COMMUNICATION IF│ │ INPUT IF │   │ OUTPUT IF │
└──────────┘   └──────────┘   └──────────┘
   2104            2105            2106
```

| | Europäisches Patentamt European Patent Office Office européen des brevets | **EUROPEAN SEARCH REPORT** | **Application Number** EP 25 17 7604 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 346 226 A1 (CANON KK [JP]) 3 April 2024 (2024-04-03) | 1-5,7-20 | INV. H04N25/62 |
| A | * paragraphs [0004], [0036], [0054] - [0073], [0078], [0086]; figures 1, 1, 4, 6, 8, 11, 15, 16, 17 * | 6 | H04N25/68 H04N25/773 |
| | ----- | | |
| Y | EP 2 076 020 A2 (NIKON CORP [JP]) 1 July 2009 (2009-07-01) | 1-5,7-20 | |
| A | * abstract; claims 1-4; figures 1, 2A, 2B, 3 * | 6 | |
| | ----- | | |
| Y | US 2011/032393 A1 (YAMAGUCHI TOSHIRO [JP]) 10 February 2011 (2011-02-10) | 1-5,7-20 | |
| A | * claims 1-5; figures 1, 3 * | 6 | |
| | ----- | | |
| Y | US 8 711 254 B2 (MATSUOKA MASAAKI [JP]; CANON KK [JP]) 29 April 2014 (2014-04-29) | 1-5,7-20 | |
| A | * column 11, lines 47-50; claims 1-3; figures 1, 4, 9A, 9B * | 6 | |
| | ----- | | |

| TECHNICAL FIELDS SEARCHED (IPC) |
|---|
| H04N |

The present search report has been drawn up for all claims

| Place of search | Date of completion of the search | Examiner |
|---|---|---|
| Munich | 29 August 2025 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 7604

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | | Publication date |
|---|---|---|---|---|---|
| EP 4346226 | A1 | 03-04-2024 | EP | 4346226 A1 | 03-04-2024 |
| | | | JP | 7686605 B2 | 02-06-2025 |
| | | | JP | 2024048797 A | 09-04-2024 |
| | | | US | 2024107192 A1 | 28-03-2024 |
| EP 2076020 | A2 | 01-07-2009 | EP | 2076020 A2 | 01-07-2009 |
| | | | JP | 5141245 B2 | 13-02-2013 |
| | | | JP | 2009164690 A | 23-07-2009 |
| | | | US | 2009167907 A1 | 02-07-2009 |
| US 2011032393 | A1 | 10-02-2011 | CN | 101998068 A | 30-03-2011 |
| | | | JP | 5379601 B2 | 25-12-2013 |
| | | | JP | 2011040893 A | 24-02-2011 |
| | | | US | 2011032393 A1 | 10-02-2011 |
| | | | US | 2014247377 A1 | 04-09-2014 |
| US 8711254 | B2 | 29-04-2014 | JP | 5615155 B2 | 29-10-2014 |
| | | | JP | 2011151792 A | 04-08-2011 |
| | | | US | 2011149123 A1 | 23-06-2011 |

EPO FORM P0459

For more details about this annex : see Official Journal of the European Patent Office, No. 12/82

**REFERENCES CITED IN THE DESCRIPTION**

**Patent documents cited in the description**

- JP 2023118661 A